(19) Europäisches Patentamt
European Patent Office
Office européen des brevets

(11) Publication number: **0 322 790 A2**

# (12) EUROPEAN PATENT APPLICATION

(21) Application number: 88121586.7

(51) Int. Cl.⁴: **F02D 11/10 , B60K 28/16**

(22) Date of filing: 23.12.88

(30) Priority: 25.12.87 JP 329146/87

(43) Date of publication of application: 05.07.89 Bulletin 89/27

(84) Designated Contracting States: DE GB

(71) Applicant: **NISSAN MOTOR CO., LTD.**
No.2, Takara-cho, Kanagawa-ku
Yokohama City(JP)

(72) Inventor: **Tamura, Minoru**
No. 99-8, Nakazawa-cho
Asahi-ku Yokohama City(JP)
Inventor: **Katayose, Shinji**
No. 4-7, 1-127, Midorigaoka
Atsugi City(JP)
Inventor: **Iwata, Toru**
1-13, 6-302, Futaba
Yokosuka City(JP)
Inventor: **Murakami, Terukiyo**
No. 4-8-30-108 Maruyamadai
Konan-ku Yokohama City(JP)

(74) Representative: **Patentanwälte Grünecker, Kinkeldey, Stockmair & Partner**
Maximilianstrasse 58
D-8000 München 22(DE)

## (54) Engine throttle valve control system for automotive vehicle.

(57) A plurality of control maps which are used to control the position of an engine throttle valve or similar device which effects the power output of the engine, are stored in memory. The wheel slip of the vehicle is monitored and if found to be below an allowable limit or limits the control map currently in use is changed or upgraded to one which exhibits more rapid engine power generation characteristics. On the other hand, if the wheel slip exceeds the allowable limit, a map downgrading is carried out which selects a map which was previously used a predetermined period of time ago. This predetermined time can be fixed or variable depending on the vehicle speed or gear position of the transmission.

EP 0 322 790 A2

FIG.2

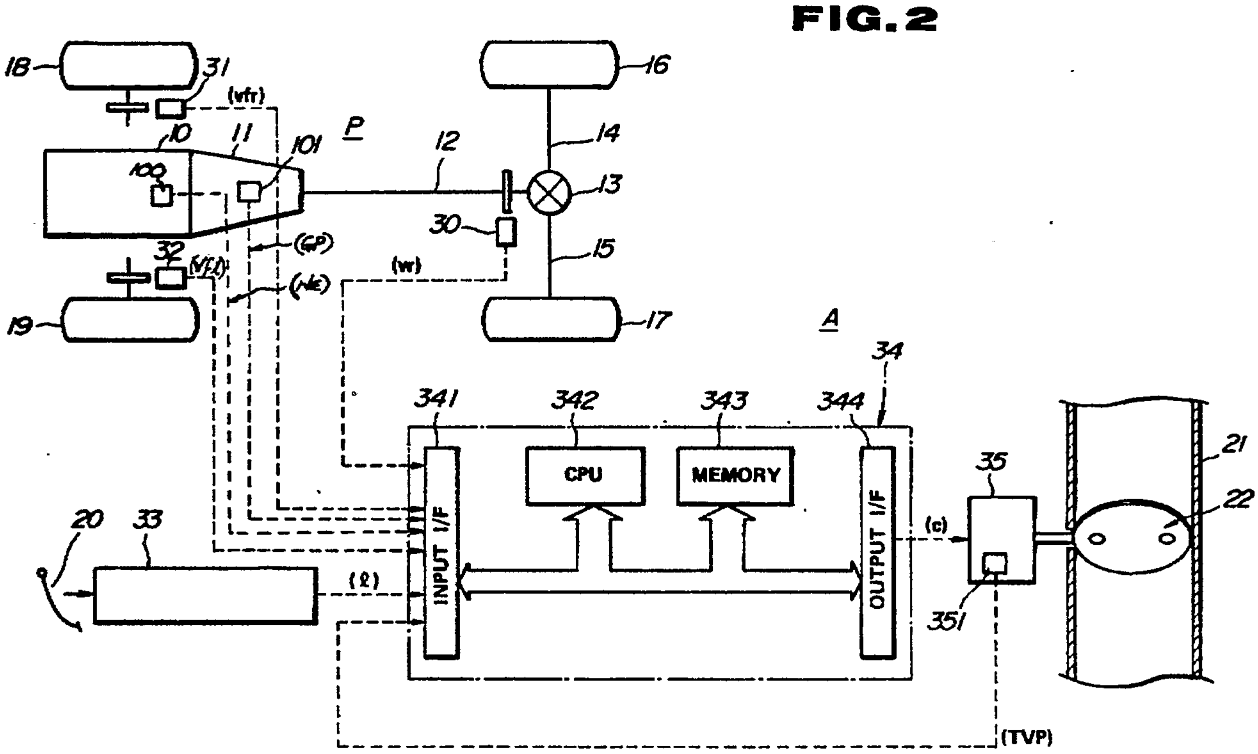
18
31
(vfr)
10
11
101
P
12
16
14
100
13
30
15
(GP)
32
(Vfl)
(w)
(NE)
19
17
A
34
341
342
343
344
CPU
MEMORY
35
21
22
INPUT I/F
OUTPUT I/F
(c)
20
33
(l)
351
(TVP)

# ENGINE THROTTLE VALVE CONTROL SYSTEM FOR AUTOMOTIVE VEHICLE

## BACKGROUND OF THE INVENTION

### Field of the Invention

The present invention relates to a vehicle control system and more specifically to a "drive by wire" type control system which enables the position of the engine throttle valve to be electronically controlled in response to accelerator position and other parameters in a manner which minimizes slip and maximizes vehicle performance.

### Description of the Prior Art

Japanese Patent Pre-publication No. 60-43133 discloses a system wherein the engine is electronically controlled in response to the vehicle accelerator. In this system the driven wheel speed and the non-driven wheel speeds are sensed and used to detect the vehicle tire slip ratio. The derived ratio is compared with a predetermined value and, in the case the instant slip value exceeds the predetermined one, the amount of fuel supplied to the engine is controlled in accordance with the accelerator position.

With this arrangement, when wheel slip occurs, the system immediately reduces the amount of fuel supplied to the engine and thus reduces the amount of power generated. However, when the slip phenomenon disappears, the amount of the fuel supplied to the engine is immediately returned to the level used before the slip began. This induces a sudden increase in the amount of torque generated by the engine and tends to cause slip to recurr. Rapid repetition of slip control tends occurs and induces the problem that the engine torque is generated sporadically and reduces vehicle occupant comfort. This problem is particularly prevalent on snowy and/or icy roads wherein slip is easily induced and occurs even if the accelerator is depressed by only a small amount.

In addition to the above, if wheel slip is encountered and the control system reduces the amount of fuel supplied to the engine and corrects the problem, the control system subsequently effects steps to increase the engine output. However, even though the system is controlled in accordance with the accelerator position parameter, even if the driver subsequently deeply depresses the accelerator to obtain vehicle acceleration the system (during this correction period) fails to respond quickly and the engine output increases gently and noticeably below the rate that would be expected for the given depression. This again gives rise to the problem that the desired response to accelerator depression is not derived and the driver experiences a disconcerting loss of response from the engine.

A yet further problem encountered with the prior art mentioned above is that the control is effected without consideration to the gear ratio in which the vehicle transmission is operating. For example, if the vehicle is operating in top gear, a sudden opening of the throttle valve will not have the same effect on wheel slip as the case wherein the transmission is conditioned to produce a lower gear which permits the engine speed to increase more rapidly and thus deliver a rapidly increasing amount of torque to the driving wheels in a manner which invites wheel slip.

## SUMMARY OF THE INVENTION

It is an object of the present invention to provide a control system which is responsive the position and operation of the accelerator pedal in a manner which, in response to the amount of wheel slip, changes the control schedule in a manner which allows for the engine response to the new control schedules and which therefore provides both good slip control and quick response to driver demand.

In brief, the above object is achieved by an arrangement wherein a plurality of control maps which are used to control the position of an engine throttle valve or similar device which effects the power output of the engine, are stored in memory. The wheel slip of the vehicle is monitored and if found to be below an allowable limit or limits the control map currently in use is changed or upgraded to one which exhibits more rapid engine power generation characteristics. On the other hand, if the wheel slip exceeds the allowable limit, a map downgrading is carried out which selects a map which was previously used a predetermined period of time ago. This predetermined time can be fixed or variable depending on the vehicle speed or gear position of the transmission.

More specifically, a first aspect of the present invention is deemed to comprise a method of controlling an internal combustion engine for a wheeled automotive vehicle, the method being featuring the steps of: sensing a power indicative parameter which varies with a demand for engine power; storing a set of control maps in a memory; arranging each of the maps to produce an engine control value the magnitude of which increase in response to the magnitude and rate of change of the power indicative parameter; designing the maps to exhibit control characteristics wherein the magnitude of the engine control signal for a given magnitude of the power indicative parameter, increases from map to map; sensing wheel slip; upgrading the maps by changing the currently used one to one which increases the response characteristics in response to: the amount of wheel slip being below a first predetermined value; and downgrading the maps in response to the wheel slip exceeding the first predetermined value, the downgrading being accomplished by changing the currently used one to one which is one rank below that which was used a predetermined time period prior the wheel slip exceeding the first predetermined value.

A second aspect of the present invention comes in that the above mentioned method further comprises the steps of monitoring a second parameter which varies with the engine speed of the engine; modifying the length of the predetermined time period in response to the magnitude of the engine speed indicative parameter in manner wherein the length of the predetermined time period is reduced with increasing engine speed.

A third aspect of the present invention is deemed to come in that the above mentioned method further features the steps of: monitoring a third parameter which varies with the transmission gear ratio of a transmission accociated with the engine; and modifying the length of the predetermined time period in response to gear ratio of the transmission in a manner wherein the length of the predetermined time period is reduced with increasing engine speed.

A fourth aspect of the instant invention is deemed to comprise a control system for an automotive vehicle having and engine and a transmission, the engine having an induction conduit through which air flows to the engine and a throttle valve disposed in the induction conduit for controlling the power output of the engine, the control system featuring: means for sensing a power indicative parameter which varies with a demand for engine power; a memory in which a set of control maps are stored, the maps being arranged so that each produces an engine control value the magnitude of which increases in response to the magnitude and rate of change of the power indicative parameter, the maps being designed to exhibit control characteristics wherein the magnitude of the engine control signal for a given magnitude of the power indicative parameter, increases from map map; upgrading the maps by changing the currently used one to one which increases the response characteristics in response to the amount of wheel slip being below a first predetermined value; and downgrading the maps in response to the wheel slip exceeding the first predetermined value, the downgrading being accomplished by changing the currently used one to one which is one rank below that which was used a predetermined time period prior the wheel slip exceeding the first predetermined value.

A further aspect of the present invention comes in the form of the above mentioned control system further comprising means for monitoring a second parameter which varies with the engine speed of the engine; and wherein the control means further includes circuitry for modifying the length of the predetermined time period in response to the magnitude of the engine speed indicative parameter in manner wherein the length of the predetermined time period is reduced with increasing engine speed.

Another aspect of the instant invention is deemed to come in that the above mentioned control system further comprises: means for monitoring gear ratio of the transmission; and wherein the control means further includes circuitry for modifying the length of the predetermined time period in response to gear ratio of the transmission in a manner wherein the length of the predetermined time period is reduced with increasing engine speed.

A further aspect of the present invention is deemed to comprise a method of controlling an internal combustion engine for a wheeled automotive vehicle, the engine being controlled by throttle valve means which is exclusively operated by an electronically generated engine control signal, the control method being characterized by the steps of: sensing a parameter which varies with a demand for engine power; storing a set of control maps in a memory; arranging each of the maps to produce an engine control signal the magnitude of which increases in response to the magnitude and rate of change of the parameter, the maps being designed to exhibit control characteristics wherein the magnitude of the engine control signal for a given magnitude of the parameter, increases from map to map; sensing wheel slip; upgrading the maps by changing the currently used one to one which reduces the response characteristics when: the amount of wheel slip is below the first predetermined value, and the control signal being produced by the instant control map is at its maximum permissible level for the instant magnitude of the parameter; downgrading the maps by changing the currently used one to which is at least one rank below the one which was used a predetermined period of time prior the occurrance of wheel slip, when the wheel slip exceeds a first predetermined value; and using the engine control signal to control the throttle valve means.

Another aspect of the present invention is deemed to comprise a control system for an internal combustion engine for a wheeled automotive vehicle, the system being characterized by: throttle valve means for controlling the amount of power produced by the engine, the throttle valve means being exclusively controlled by an engine control signal; means for sensing a parameter which varies with a demand for engine power; control map means for producing the engine control signal in a manner wherein the magnitude of the engine control signal increases in response to the magnitude and rate of change of the parameter, the control map means including a memory in which a plurality control maps are stored, the maps being designed to exhibit control characteristics wherein the magnitude of the engine control signal for a given magnitude of the parameter, increases from map to map; means for sensing wheel slip; and control means for: upgrading the maps by changing the currently used one to one which reduces the response characteristics when: the amount of wheel slip is below the first predetermined value, and the control signal being produced by the instant control map is at its maximum permissible level for the instant magnitude of the parameter; downgrading the maps when the wheel slip exceeds the predetermined value by changing the currently used one below that which was used a predetermined time period prior the exceeding of the first predetermined value; and generating the engine control signal based on the engine control value derived using the first set of maps.

Yet another aspect of the present invention is deemed to comprise a wheeled vehicle which features: a driven wheel; a first wheel speed sensor for detecting the rotational speed of the driven wheel; an undriven wheel; a second wheel speed sensor for detecting the rotational speed of the undriven wheel; a manually operable accelerator; a third sensor for detecting the position of the accelerator; an engine; an induction conduit through which air passes to the engine; a single throttle valve disposed in the induction conduit for controlling the amount of air which is permitted to pass therethrough; a servo motor unit operatively connected to the throttle valve, the servo motor being arranged to exclusively control the position of the throttle valve; a control circuit, the control circuit being responsive to the outputs of the first, second and third sensors, the control circuit being operatively connected to the servo motor unit and arranged to produce a throttle valve control signal for controlling the servo motor unit, the throttle valve control signal being indicative of the degree to which the throttle valve should be opened, the control circuit comprising: memory means for storing a plurality of engine control maps, the maps being recorded in terms of throttle valve opening and absolute accelerator movement, the maps being arranged to determine the angle to which the throttle valve should be opened for a given accelerator movement; wheel slip detection means for determining the amount of wheel slip which is occuring based on the outputs of the first and second sensors; and selection means for selecting which of the plurality of maps should be used, the selection means being responsive to the amount of wheel slip which is detected, the selection means being arranged so that upon a wheel slip in excess of a predetermined limit is detected a map which was used a predermined period of time ago is determined and utilized to determine which map is not to be used under the instant circumstances.

## BRIEF DESCRIPTION OF THE DRAWINGS

Fig. 1 shows in schematic plan a vehicle to which the embodiments of the present invention are applied;

Fig. 2 shows in block diagram form the basic hardware arrangement to which the embodiments of the present invention are applied;

Fig. 3 is a graph showing in terms of absolute accelerator depression and throttle valve opening, the control characteristics provided by 8 control maps 0# - 7# which are stored in the memory of the sytem in accordance with a first embodiment of the present invention;

Fig. 4 shows in terms of throttle valve position change and relative accelerator movement or depression, a map which is used in the first embodiment to determine the degree by which the throttle valve should be moved for a given change in accelerator depression;

Figs. 5A and 5B show a flow chart which depicts the steps which characterize the operation of the first embodiment;

Fig. 6 shows a second flow chart which depicts the steps conducted in an sub-routine of the main routine shown in Figs. 5A - B;

Fig. 7 is a graph showing in terms of the rotational speed difference between the front and rear wheels of the vehicle and the rear wheel speed, the manner in which the slip ratio varies;

Fig. 8 is a timing chart which shows in terms of time, the changes in throttle valve position (lower section) which correspond to the variation in rotational speeds of the front and rear wheels which are induced by a predetermined set of operational conditions, provided with the first embodiment of the present invention;

Fig. 9 is a flow chart showing the steps which characterize the operation of a second embodiment of the present invention;

Fig. 10 is a timing chart which shows the relationship between the engine speed, wheel speed and the pre-memorized maps which occurs in accordance with the second embodiment of the present invention;

Fig. 11 is flow chart showing the steps which characterize the operation of a third embodiment of the present invention;

Fig. 12 is a timing chart which shows the relationship which develops between the transmission gear ratio, wheel speed and the pre-memorized maps in accordance with the third embodiment of the present invention;

Fig. 13 shows a two dimensional map which shows the four gear ratios recorded in terms of an engine response factor (NAGO) and engine rotational speed (NE) and which is used in an alternative embodiment of the present invention; and

Fig. 14 shows in flow chart form, an alternative depiction of the steps which are carried out in steps 251 - 255 of the flow charts pertaining to the second and third embodiments of the present invention.

## DETAILED DESCRIPTION OF THE PREFERRED EMBODIMENTS

Fig. 1 shows schematically the harware arrangement involved with the embodiments of the present invention.

As shown in this figure, the rotational speeds of the drive and non-driven wheels are sensed (a, b) and the data derived used to determine the instant slip ratio (c). In accordance with the first embodiment, the instant accelerator depression degree (d) is sensed and used to in combination with the instant slip ratio determined at (c) to determine which map is to be read out of the map memory and used for control purposes. The amount of acceleration depression is also used to in combination with the map determination carried out at (g) to determine the throttle position which is desired under the instant set of operational conditions. The actual throttle position is sensed at (e) and this is used in combination with the target throttle setting derived at (h) to ascertain the amount (j) by which the throttle valve should be moved in order to obtain the target position. This amount is converted to a control signal which is applied to the throttle valve actuator (i).

In accordance with the second embodiment the engine speed is additionally sensed at (k) and used at (g) to determine which of the maps is to be used. In the third embodiment, the instant gear ratio which the transmission is conditioned to produce is sensed and this data is used at (g).

Fig. 2 shows in schematic form a vehicle to which the embodiments of the present invention are applied. This arrangement includes an engine 10, and a power train P. In this instance the power train comprises a clutch and transmission unit 11, a drive shaft 12 interconnecting the transmission and a final gear or differential 13. The rotational speed VFR, VFl of the undriven wheels (in this instance the forward wheels) of the vehicle are sensed by individual rotational speed sensors 31, 32 while the rotational speed VR of the driven wheels is detected by a single sensor 30 which detects the rotational speed of the drive shaft 12.

Although the instant arrangement depicts a F-R (front engine - rear wheel drive) type vehicle it will be understood by those skilled in the art of automotive engineering that the present invention is not limited to such drive train arrangements and a similar sensor arrangement can be applied to F-F (front engine - front wheel drive) and the like type of drive trains as desired.

A control circuit 34 which in this instance includes a microprocessor is arranged to receive data inputs from the three rotational speed sensors 30, 31 and 32, and a potentiometer 33 operatively connected to an accelerator pedal 20 (hereinafter referred to as the accelerator) via an input interface 341.

The memory (RAM/ROM) 343 of the microprocessor contains control programs, maps and other pertinent data which will be discussed hereinlater and which take the data provided and determined the most appropriate setting for the engine throttle valve 22.

The control data derived in the CPU 342 of the processor is converted to a control signal and applied via an output interface 344 to an actuator 35 operatively connected with the throttle valve 22.

The above mentioned rotational speed sensors may take the form of sensors which utilize light sources and shutter discs to produce a pulse signal indicative of rotational speed or alternatively a magnetic flux responsive arrangement. In the case the output of the sensor is analog the signal is F/V converted and subsequently A/D converted before being supplied to the CPU 342. The output of the potentiometer 33 is A/D converted.

In the instant embodiment the actuator 35 includes a stepping motor which is responsive to a pulse signal outputted by the control circuit.

The illustrated system also includes (for the purposes of the second embodiment of the present invention) an engine speed sensor 100 and a transmission gear ratio sensor 101. The outputs of these sensors (shown in phantom) are fed to the input interface of the control circuit 341.

In the instant arrangement a counter is provided in the memory 342 of the control unit (i.e. a soft counter) in a manner to be reponsive to STEP control signal which is issued from the output interface 344 to the throttle valve actuator 35. Each time a signal is issued in manner which induces the stepping motor in the actuator to step in manner which either opens or closes the throttle valve, a corresponding change in the count is induced and thus enables the position of the throttle valve (theta) to be constantly known. Viz., if the stepping motor is induced to step one increment in a direction which increases the throttle valve opening degree, the count is incrementally increased and vice versa.

It is alternatively possible to incorporate a sensor (e.g. as shown by #351) in the actuator 35 and to feed the output of the same (TVP) to the input interface 341 in manner to provide a backup position detection arrangement which can be utilized to periodically ascertain if the count in the control circuit is truly indicative of the actual opening or not. This sensor can be as simple as a limit switch which can be triggered when the throttle valve is either fully open or closed. Viz., merely by way of example, when the throttle valve is closed the switch can be induced to output a signal and the count stored in the memory checked to determine if the count corresponds to the fully closed position or not.

With the first embodiment the inputs generated by the sensors 100 and 101 are not required.

It should be noted that in place of the three wheel speed sensors it is also possible to use a vehicle speed sensor and a sensor which senses the speed of the driven wheels of the vehicle. For example, if desired it is possible to use a doppler radar or the like to measure the "ground speed" in combination with other types of sensors which are capable of detecting wheel speed or similar parameters which are indicative of the same. As the various techniques of determining the wheel slip ratio will be obvious to those skilled in the art of automotive engineering no further discussion is deemed necessary.

The memory 343 ROM of the control circuit 34 includes in the instant embodiment, domain control maps #0 to #7. These maps are plotted in terms of throttle valve position (THETA) and absolute accelerator movement or depression (1). Table 1 shows the correspondance between the values of "$\mu$" (coefficient of friction) and each of the maps.

TABLE 1

| MAP | #0 | #1 | #2 | #3 | #4 | #5 | #6 | #7 |
|---|---|---|---|---|---|---|---|---|
| "$\mu$" | - | 0.9 | 0.8 | 0.5 | 0.4 | 0.3 | 0.2 | 0.1 |

As will be appreciated from Fig. 3 map #0 is one which will produce the most rapid response to accelerator depression. Viz., with this map the upper limit line is such that the throttle valve is opened sufficiently rapidly as to assume a fully open position when the accelerator has been depressed only 3/4 of its maximum amount of depression. Following this the throttle opening remains at its maxium until the accelerator is fully depressed (4/4).

The lower limit of the first map is such as to extend directly from the point which corresponds to the maximum accelerator depression and throttle opening to the point which corresponds to the zero opening and zero depression values.

The second map #1 is such that the upper limit line extends upwardly with an inclination which is steeper than that corresponding to a directly proportional opening but less sharply than the upper limit line of map #0. This upper limit line levels off at a value approximately 86% of maximum throttle opening, after the accelerator has been depressed 3/4 of its maximum possible depressive movement and remains constant irrespective of further pedal depression. The lower limit line of the second map is such as to extend directly from the point where the upper limit line reaches the maximum accelerator pedal depression value (4/4) to the zero opening/depression point.

Subsequent maps #2 to #7 progressively produce less responsive throttle openings in a similar manner as will be readily apparent from the figure.

The ROM further includes data which is logged in terms of throttle position change and relative accelerator movement. This data is depicted in Fig. 4. If preferred it is possible to record one map wherein the data is such as depicted by the solid line and use this data for all calculations or alternatively provide a second map wherein the data recorded is such as depicted by the broken line. In the event that both the tables are recored it is possible to use the broken line characteristics only when map #0 for example is being used to control the system and the solid line data when maps other than the most responsive one are being employed. As will be appreciated the broken line provide more gently throttle opening characteristics than obtained with the solid line.

Figs. 5 and 6 show flow charts depicting the steps which characterize the operation of the first embodiment. Fig. 5 shows the main control routine. This routine is arranged to be initiated by an interrupt and to run at 20msec intervals (by way of example). Fig. 6 shows a sub-routine which is run each time the main program flows through its final step 202.

The control circuit 114 is arranged to be responsive to the position of the engine ignition switch in a manner that when the switch is first closed (moved from the OFF position to the ON one) the microprocessor is initialized and a flag MAPFLAG is arbitarily set to zero, other flags used in the system are cleared (see step 101) and the program flows on. In order to check if the instant run of the control routine is the first since the system was intialized step 100 is provided. In this step it is determined if this is in fact the first run or not. If the answer is negative then the program bypasses step 101.

Steps 102 to 107 involve the derivation of the instant slip ratio. At step 103 the inputs of the three speed sensors are sampled and the values temporarily stored. In step 103 the average front wheel speed is determined using the equation:

VF = 1 2(VFR + VFL) (1)

At step 104 the rear wheel speed Vr is compared with a predetermined value indicative of a vehicle speed of 40Km/h. In the event that the speed is equal to or greater than this value then the program flows to step 105 wherein the slip ratio S is derived using equation:

S = (VR - VF)/VR (2)

However, in the event that VR is less than the predetermined value then at steps 106 and 107 the difference between the front and rear wheel speeds is determined and this value set in memory as S.

This situation is depicted in Fig. 7. Viz., for any value derived under the predetermined value (40Km/h) the value of S remains constant while after said limit the value of "$\mu$" increases linearly.

In accordance with the present invention in order to control the selection of the appropriate map it is important to determine a factor which shall be referred to as "accelerator-work". In order to do this it is necessary to determine the instant status of the control. Steps 150 to 154 show the mode via which this derivation is executed.

At step 150 the value L1 of the absolute accelerator depression recorded during the last run is set in memory as the value L2 of the run before last. At step 151 the current value LC currently held in memory (actually determined in the last run) is recorded as L1.

At step 152 the outputs of the potentiometer 33 and the throttle position sensor 35 are both sampled and the freshly determined instant value of L0 and the instant throttle valve setting THETA 0 are both updated. In step 153 the instant change in the absolute accelerator depression (viz., relative accelerator movement) (DELTA L0) is ascertained by determining the difference between the values of L0 and L1, while at step 154 the previous change in absolute accelerator depression (DELTA L1) is obtained by determining the difference between the values of L1 and L2 as currently held in memory.

MAP RECORDAL/UPDATE

Stops 251 to 255 control the recordal of the maps which have been used over last 600msecs of operation. It of course should be appreciated that the present invention not limited to 600msec and that any other suitable period of time can be used as desired.

Steps 251, 252 and 253 are arranged to define a loop wherein each time program passed therearound, one of a stack of thirty map values are updated. Of course the present invention is not limited to the use of 30 values and more or less can be used as deemed appropriate. However, in the instant embodiment as the main control routine is arranged to be run at 20msec intervals, recording 30 of such values provides one for each run over the preselected 600msec period.

This high speed loop includes a counter CTR which is arranged to count up to 30 and thus induces a sequential series renewal cycles before preceeding on to the next section of the program. In more detail, step 251 is arranged to check the instant CTR count and to induce the program to flow to step 252 while the count is lower than the predetermine limit of 30. At step 252 each of 30 MAPFLG values are which are tagged with a CTR value are read out (one per cycle of the loop) of their respective addresses, the value of CTR incrementally increased by one and set back in the next address (viz., the address of the updated CTR value. The first of the map values which becomes vacant via this process is replaced with the instant MAPFLG and a tagged with a CTR value of 1. In other words MAPFLG + (1), MAPFLG + (2), ...... MAPFLG + (29) are updated respectively to MAPFLG + (2), MAPFLG + (3) with instant MAPFLG value which is tagged with + (1). This of courses updates the stack of 30 values on each run of the program and thus maintains an up to date running record of the maps which have been used over the last 600msec. In the instant embodiment, only the oldest of the data is used - viz., the MAPFLG which is stored at the MAPFLG + (3) address. In subsequent embodiment it is necessary to have the full 30 values constantly on hand so as to be able to selectively read the same. The reason for this will become more apparent later.

Upon the predetermined CTR count value (30) being reached the program flows across to step 254 wherein the value of the MAPFLG currently stored at the MAPFLG + 30 address is written as the new MAPOLD value and suitably stored in memory. This value is used in steps 123, 124, 129 and 130 which will be dealt with later.

At step 255 the counter CLR is cleared.

Fig. 14 depicts the above process in a modified flow chart form. As will be seen, at the first step 1001 the old MAPFLG values are each updated via transfer from the instant address to the next one. At step 1002 the instant MAPFLG is read and the value set in the MAPFLG + (1) address. At step 1003 the value of NAGO which corresponds to the instant engine speed is determined and the MAPFLG value which is recorded at the corresponding address is written into memory as the new value of MAPOLD.

MAP UPGRADE CONTROL

This section of the main control routine is such as to determine the upgrading or selection of a new domain control characteristic map (or throttle valve control map as it had been alternatively referred to hereinbefore) based on the amount of slip occuring and the amount of movement of the accelerator 20.

At step 115 the instant accelerator depression value L0 is compared with an upper depression limit LH in a manner wherein if it is found that the upper limit has been equalled or exceeded the program flows across to step 116. In this embodiment LH is set to correspond to a 3/4 depression of the accelerator and to denote a threshold which corresponds the one whereat the transmission is apt to be induced to undergo kickdown.

On the other hand, if the upper depression limit has not been exceeded, the program flows to step 250 wherein the instant depression is compared with a lower depression limit LL. In the instant embodiment the lower limit is selected so that LL = 1/4.

In the event that the instant amount of accelerator depression is between the above mentioned upper and lower limits the program flows directly to step 120. However, if the amount of depression is less than the lower limit LL then at step 110 it is determined if DELTA L0 is greater than zero. If the outcome is negative, indicating no change in accelerator depression, then steps 111 to 114 are bypassed. However, in the event that DELTA L0 has a value greater than zero (viz., there has actually been a change in the pedal depression, then sat step 111 the instant value of S is compared with the value S0 (wherein S0 = 0.1 for example) If the value of S is found to be less than S0 then it can be assumed that there is little or no slip occuring and the program goes to step 112. However, if the reverse situation is ascertained then it can be assumed that the wheels are slipping possibly to the degree that upgrading of the control map should not be implemented and the program flows to step 120.

At step 112 the instant value of THETA 0 is compared with a maximum permissible value THETA max. If the value is at or greater than the upper limit then conditions necessary to permit upgrade are met and the program goes to step 113 wherein the instant value of flag MAPFLG is read out of memory. If the flag MAPFLG is found to other than "0" then the program flows on to step 114 wherein the value thereof is incremented by 1.

On the other hand, if the outcome of the enquiry conducted as step 112 indicates that the throttle valve has not yet been opened to the maximum value determined by the instant domain control map, it is deemed that it is not yet necessary to necessary to consider changing maps as the limit of the instant map has not as yet been reached. At step 113 if it is found that the system is currently being operated on map #0, as no further upgrade is possible under such conditions, step 114 is by-passed to obviate redundant processing.

A will be noted, unless all of the conditions defined in steps 110 - 112 are met and the system is operating on one of the maps #1-7 then the program will not flow through step 114 and will flow of to step 120.

In the event that the outcome of step 1.15 is such that the instant accelerator depression L0 was greater than or equal to the upper limit LH then at step 116 the instant slip rate is compared with S0. In the event that the instant slip S is less than or equal to S0 then at step 117 the count or a timer TMR is checked. If TMR is still counting then the program flows across to step 118 wherein the count of the same is incrementally increased.

When the counter TMR has reached its predetermined value the program flows to step 161 wherein the instant MAPFLG value is checked. If the value is found to be 0 then the program by-passes step 162 and at step 163 the timer TMR is cleared.

At step 119 the timer TMR is also cleared. In this instance the clearing is performed in response to the outcome of step 116 indicating that the instant amount of wheel slip is greater than S0 and that steps which are involved in map upgrading should be avoided for the time being. In the instant embodiment the count of timer TMR is arranged to correspond to a period T0 which is set in this instance at 0.8 seconds.

In the event that the instant control map is determined in step 161 to be still between #1 and #7 then the program flows to step 162 wherein the value of the MAPFAG is incrementally decreased by 1 (viz., sets the MAPFLG to call a higher performance map from memory) and then goes to step 163 wherein a command to clear TMR is issued.

MAP DOWNGRADE CONTROL

At step 120 the instant value of S is compared with a value S1 (eg. S1 = 0.1). If the outcome indicates that the value is less than S1 then the program goes to step 125 wherein a flag FLAG A is set to 0 (indicating that downgrading is not required). However, if the value of S is greater than S1 then the possibility of that the map in current use is overly responsive for the instant set of conditions is established and at step 121 the instant value of a FLAG.A is determined. If the value is 1 the program goes on to step 126 while in the event that it is 0, it is set to 1 in step 122. In this instance FLAG.A serves to provide a first indication that map downgrading is required or not. In this embodiment when FLAG.A is set to 1 a flow toward downgrading is induced.

At step 123 the value of MAPOLD indicative of the MAPFLG that was set 600msec ago and which was determined in step 254, is readout of memory and compared with a predetermined value. In this case the value is selected as 7 which denotes the use of map #7. Viz., in the case the instant value of MAPOLD is 7 is impossible to induce further downgrading and as result the program by-passes steps 124 to 130 to avoid unnessary time consuming redundant processing. On the other hand, in the event that the MAPOLD value is less than 7 then at step 124 the value of MAPOLD is incrementally increased and written into memory as a new value of MAPFLG. This, thus establishes the situation which will induce the map which is one rank below the one actually used 600msec ago to be employed.

At step 126 the instant value of S is compared with a value S2 (eg. S2 = 0.3). If the value is found to be lower, then at step 131 a FLAG.B is set to 0. However, if the value is higher, then at step 127 the instant status of FLAG.B is determined. If the value is not 0 then the program goes to step 140. On the other hand, if the value of FLAG.B is 0 then it is set to 1 in step 128 to indicate a strong need to downgrade the currently used map.

At step 129 the instant status of MAPOLD is again determined and if less than 7 it is incrementally increased by 1 in step 130. In the same step the current MAPFLG value is read out and updated to the assume the same value as the incrementally increased MAPOLD value. This has the effect of doubling the downgrading effect of step 124 in the event that the program has flow therethrough. On the other hand, if FLAG.A was set to 1 prior step 121 then a single downgrading increment is all that is carried out.

At step 140 the current status of MAPFLG is read of memory and the corresponding map fetched from memory (ROM) and set in RAM ready for the just mentioned control.

As will be appreciated, the flow chart from step 120 to 140 is such as to double check the wheel slip against progressively increasing values and to set flags A and B which will guide toward a downgrading which calls a map which is one rank lower than the one which was in use 600msec ago.

In contrast, the steps 115 to 114 and 116 to 163 are such to control upgrading and require that: an acceptably small amount of slip is occuring; the throttle has been opened to maximum value permissible under the instant control map for the instant absolute accelerator depression; and that the accelerator is actually being moved in a direction which requires the throttle to opened further are all simultaneously coexistent.

Following the setting of the MAPFLG in step 140 the program flows to step 164 wherein the same enquiry as performed in step 250 is again carried out. Viz., it is determined if L0 > LL.

## ACCELERATOR WORK DECISION ROUTINE

In the event the the outcome of step 164 reveals that the amount of accelerator depression is greater than LL (viz., 1/4) then the program enters a series of steps (steps 150 - 154 and 155 to 159) which determines the amount of "work" done on the accelerator.

In step 155 it is determined if the value of DELTA L0 (amount of relative movement of the accelerator determined during the instant run) is greater than 0. If it is then the program goes to step 156 wherein it is determined if the value of DELTA L1 ( the amount of relative movement of accelerator as determined during the previous run) is greater or equal to 0. If the relative accelerator movement (DELTA L1) is 0, then the program flows to step 158 wherein the instant value of L is again sampled and the instant value L0 set in RAM as the standard value L00. Subsequently, in step 159 the count which is indicative of the throttle valve position is read out of memory and the instant value THETA 0 set as a standard value THETA 00.

## DERIVATION OF RELATIVE ACCELERATOR STROKE

It will be noted that the updating of the two above mentioned standard values is conducted only in the event that DELTA L0 is not greater than 0 and DELTA L1 is not greater or equal to 0. Viz., if insufficient "work" is being done on the accelerator pedal then the demand for throttle position change is assumed non-existent.

In step 160 the length of the stroke of the accelerator which has taken place is determined. Of course during the run wherein the standard values are updated, DELTA L will have a value of 0 (viz., L0 - L0 = 0).

## DERIVATION OF THE THROTTLE VALVE OPENING CHANGE

In step 170 the value of DELTA L derived in the previous step (step 160) is used to determine the corresponding value of DELTA THETA using a map such as depicted in Fig. 4.

## DERIVATION OF THROTTLE VALVE OPENING TARGET VALUE

Steps 180 - 185 relate to the derivation of the throttle opening target value.

At step 180 a temporary throttle opening target value THETA THETA is derived by adding the value of DELTA THETA (derived in step 170) to the standard value THETA 00 determined in step 159. Following this the THETA THETA value is firstly ranged against a value THETA max which is obtained from the map which is nominated in step 140. In step 183 it is again ranged but this time against a value THETA min (also obtained from the instant domain control map - viz., from the lower boundary line of the instant map). In accordance with the two rangings the appropriate value of THETA THETA is temporarily set in RAM (see steps 182, 184 and 185) as the instant throttle opening target value THETA #.

## THROTTLE POSITION CONTROL

At step 200 a value EPSILON is obtained by subtrating the value of THETA 0 from the target value THETA #. Viz., the angle through which which the throttle valve should be rotated from its present position in order to arrive at the target value, is derived.

Depending of the magnitudes of the just mentioned values the value of EPSILON will be either positive or negative. In the case of a positive value the stepping motor which forms part of actuator 124 will be energized to rotate in a first direction while in the case of a negative result will be energized in the reverse direction. At step 201 a command is issued to prepare the stepping motor and in step 202 an "oci" Routine is implemented. .

Fig. 6 shows the steps which characterize the operation of the "oci" routine. In step 300 if the value of SIGMA is 0 then a command which holds the motor in its present state is issued. On the other hand, if the value is not 0 then at step the decision as to which way the motor should be operated is issued. In this step if the value of SIGMA is positive (by way of example) then at step 304 a command to increment the present position by one step is issued. However, if the value if negative, then at step 303 a command to decrease the instant position by one increment is issued. At step 301 the appropriate command is issued through the output interface of the control circuit to the stepping motor is actuator 124.

With the above program it is possible to achieve the control depicted in Fig. 8.

In this example the vehicle is indicated as being operated under the regime defined by control map #7 and the slip ratio S is such that S is less than or equal to S0 (s) = 0.1) steps 116 to 118 and steps 161 to 163 induce the sequential upgrading of the maps in a manner that until map #1 is reached the slip ratio S remains below the S value. However at time point t1 the amount of slip exceess S1 and the instant map is downgraded to map #6. Viz., in accordance with the first embodiment, upon a downgrading being induced the map one rank below that which was used 600msec previously is selected. In this case at time point t0 which is defined 600msec prior to time point T1, map #5 was in use. As a result of MAPOLD set in step 254 ( which would nominate map #5) and the incrementing carried out in either of steps 124 and 130, the map which is selected becomes #6.

This rather dramatic and non-stepwise downgrading reduces the throttle valve opening for the given accelerator depression and reduces the power output of the engine in manner which is suitable for obviating the instant slip conditions. Further, downgrading to map #7 for example is preferably avoided in that this tends to inhibit subsequent acceleration once the slip has been controlled within acceptable limits.

With the first embodiment the following effects are derived.

As the maps are used are recorded in terms of absolute accelerator depression and throttle openging degree and the throttle position control is modified depending on the relative movement of the accelerator, the position control gain varies with the amount of "accelerator work" and thus provides for good acceleration response characteristics.

The relationship between the change in absolute accelerator depression and the change in throttle position varies in the manner shown in Fig. 4 and prevents the generation of jerking in response to small changes in the accelerator depression.

When the vehicle speed is low the slip ratios are held constant as shown in Fig. 7, only a small change in the difference between the forward and rear wheel rotation is necessary to control upgrading and downgrading, accurate sensing and precision calculation is not required and upgrading and downgrading due to calculation errors does not occur.

When the amount of accelerator depression is small (e.g. less than 1/4) map upgrading is prevented and the instant map is maintained and the relationship between the absolute accelerator depression and the throttle opening is stabilized. Further, under such conditions large throttle openings are prevented and when low grade maps are used, the generation of large amounts of torque are prevented and simultaneously allows for minute changes in accelerator depression.

It should be noted also that while the absolute accelerator depression is below the predetermined lower limit it is possible to minimize the gain of the throttle opening control with respect to the absolute accelerator derpession amount.

When the instant throttle depression amount falls between the upper and lower limits, (1/4, 3/4), and the slip ration S is less than S0, the driver is provided with natural acceleration response characteristics.

Further, when the actual throttle position assumes the upper maximum opening angle THETA max, a sudden maximizing of the engine output power is not exhibited.

When the instant throttle depression reaches and/exceeds the upper limit (3/4) for the instant map, upgrading is induced in the event that the slip ratio remains below S0 for a given set period of time T0. With this provision the driver can induce very high acceleration when upper maps are in use.

In the event that the slip ratio is exceeded while the throttle opening degree is increasing and slip occurs, in view of the delay in engine response, the value of the map which was in use 600msec previously is recalled and one which is at least one rank lower is fetched from memory and put into use. Depending on the severity of the slip a map which is two ranks lower than that used 600msec previously can be put into use. This suppresses the amount of power produced by the engine in a manner suited for the current road wheel/road surface frictional characteristics and which obviates the undesirably slip

## SECOND EMBODIMENT

Figs. 9 and 10 show the control which characterizes a second embodiment of the present invention. In this embodiment the engine speed is used determine which map will be put into use. In the flow chart shown in Fig. 9 steps 100 to 105 and 150 to 154 are the same as those shown in Fig. 5. Accordingly, redundant disclosure relating to the same will be omitted for brevity.

In this embodiment the engine speed Ne is read and at steps 256 a NAGO value which corresponds to the same is derived. As will be noted the maxiumn value of NAGO in this instance is 30 while the minimum is 10. This determination may be carried out using an algorithm or by utilizing a map look-up technique.

At step 257 this control routine the MAPFLG value is stored at the address corresponding to the value of NAGO determined in the previous step is read out of the stack of 30 map values which have been updated in steps 251 to 253, and rewritten as the new value of MAPOLD.

For Example, when the engine speed is lower than 1000 RPM the instant embodiment is arranged so that the value of NAGO is 30. In this instance this will induce the last of the 30 recorded map values to be read of memory (viz., a value that was in use 600msec ago). Accordingly the map selection shown occuring at time t2 in Fig. 10 will take place. On the other hand, if the engine speed is high (e.g. approximately 6000 RPM) when the slip becomes excessive at time point t3 then the value of NAGO that is obtained in step 256 falls to 10. The map value which is stored at the MAPFLG + (10) address corresponds to to that is one which was in use only 200msec previously. Accordingly, as shown in the timing chart of Fig. 10, the map which was in use 200msec previously as map #4. At step 124 (see Fig. 5) this value is downgraded by 1 and thus the map which is impelemented in this instance becomes map #5. This reduced reduction in the map ranking reduction is due to the fact that the rate at which the engine speed will reduce in response to reduced throttle opening is more pronounced at high speed than at lower ones.

Figs. 11 and 12 show a second embodiment of the present invention. This embodiment is basically very similar to the second one and differs in that the gear ratio of the transmission is monitored and used to set the value of NAGO. As indicated in Fig. 11 it is assumed that the transmission is of the four speed type. In this case as the gear ratio increases so does the value of NAGO.

It will be noted that NAGO/Ne schedule is not limited to that shown in Fig. 11 and one of the nature depicted in Fig. 13 can be used if so desired. As will be apprecaited this combines both the engine speed and gear ratio control parameters and thus enables improved slip control in that it is simultanouesly responsive to both of said parameters.

As will be readily appreciated, the present invention is not limited to the parameter discussed in the above embodiments and that a large number of variations are with the scope of the same. For example, it is also possible to utilize parameters such as engine supercharge or boost pressure, induction vacuum in order to determine the NAGO value which will modify map determination.

## Claims

1. In a method of controlling an internal combustion engine for a wheeled automotive vehicle the steps comprising:
sensing a power indicative parameter which varies with a demand for engine power;
storing a set of control maps in a memory;
arranging each of said maps to produce an engine control value the magnitude of which increase in response to the magnitude and rate of change of said power indicative parameter;
designing said maps to exhibit control characteristics wherein the magnitude of the engine control signal for a given magnitude of said power indicative parameter, increases from map to map;
sensing wheel slip;
upgrading the maps by changing the currently used one to one which increases the response characteristics in response to:
the amount of wheel slip being below a first predetermined value; and
downgrading the maps in response to the wheel slip exceeding said first predetermined value, said downgrading being accomplished by changing the currently used one to one which is one rank below that which was used a predetermined time period prior the wheel slip exceeding said first predetermined value.

2. A method as claimed in claim 1 further comprising the steps of:
monitoring a second parameter which varies with the engine speed of said engine; and
modifying the length of said predetermined time period in response to the magnitude of said engine speed indicative parameter in manner wherein the length of said predetermined time period is reduced with increasing engine speed.

3. A method as claimed in claim 1 further comprising the steps of:
monitoring a third parameter which varies with the transmission gear ratio of a transmission associated with said engine; and
modifying the length of said predetermined time period in response to gear ratio of said transmission in a manner wherein the length of said predetermined time period is reduced with increasing engine speed.

4. A method as claimed in claim 1, wherein said upgrading upgrading step is induced in response to the value of said control signal produced by the instant control map being at its maximum permissible level for the instant magnitude of said power indicative parameter.

5. A method as claimed in claim 1, wherein said step of upgrading further requires that the rate of change of the magnitude of said power indicative parameter in a direction which requires increased engine output, is greater than zero.

6. A method as claimed in claim 1 further comprising the steps of:
changing the maps in a direction which reduces and downgrades the response characteristics in the event that the wheel slip is below a second predetermined value.

7. A method as claimed in claim 8 further comprising the step of arranging the map change which downgrades the same in response to the slip exceeding the second predetermined value to occur after the change which downgrades in response to the slip exceeding said first predetermined value.

8. A method as claimed in claim 1, wherein said wheel slip is determined by:
determining value of a vehicle operation parameter which varies with the vehicle speed;
determing the wheel speed of the driven wheels of vehicle; and
comparing the wheel speed and vehicle speed indicative values to determine the value of the difference therebetween.

9. A method as claimed in claim 8 further comprising the steps of:
determining a predetermined vehicle speed limit;
using the difference obtained in said comparing step when the vehicle speed is below said predetermined vehicle speed limit;
using value derived by dividing the difference obtained in said comparing step with the wheel speed of said driven wheels.

10. A method as claimed in claim 1 further comprising the steps of:
using the rate at which the power demand indicative parameter is changing to determine the change in engine control signal; and
limiting the value of the control signal to a value defined between the upper an lower limits of the instant control map.

11. A method as claimed in claim 10, wherein said power demand signal change rate is determined by cyclically noting the value of the demand signal and using the difference between the instant value and the previously recorded value and the difference between the previously recorded value and the value recorded before that.

12. A control system of an automotive vehicle having and engine and a transmission, said engine having an induction conduit through which air flows to said engine and a throttle valve disposed in said induction conduit for controlling the power output of said engine, said control system comprising:
means for sensing a power indicative parameter which varies with a demand for engine power;
a memory in which a set of control maps are stored, said maps being arranged so that each produces an engine control value the magnitude of which increases in response to the magnitude and rate of change of said power indicative parameter, said maps being designed to exhibit control characteristics wherein the magnitude of the engine control signal for a given magnitude of said power indicative parameter, increases from map to map;
means for sensing wheel slip;
control means for:
upgrading the maps by changing the currently used one to one which increases the response characteristics in response to the amount of wheel slip being below a first predetermined value; and
downgrading the maps in response to the wheel slip exceeding said first predetermined value, said downgrading being accomplished by changing the currently used one to one which is one rank below that which was used a predetermined period prior the wheel slip exceeding said first predetermined value.

13. A control system as claimed in claim 12 further comprising:
means for monitoring a second parameter which varies with the engine speed of said engine; and wherein said control means further includes circuitry for modifying the length of said predetermined time period in response to the magnitude of said engine speed indicative parameter in manner wherein the length of said predetermined time period is reduced with increasing engine speed.

14. A control system as claimed in claim 12 further comprising:
means for monitoring gear ratio of the transmission; and wherein said control means further includes circuitry for modifying the length of said predetermined time period in response to gear ratio of said transmission in a manner wherein the length of said predetermined time period is reduced with increasing engine speed.

15. A control system as claimed in claim 12, wherein said control means is arranged to induce map upgrading in response to the value of said control signal produced by the instant control map assuming its maximum permissible level for the instant magnitude of said power indicative parameter.

16. A control system as claimed in claim 12, wherein said control means is arranged to induce map upgrading when the rate of change of the magnitude of said power indicative parameter in a direction which requires increased engine output, is greater than zero.

17. A control system as claimed in claim 12 wherein said control means is further further arranged to induce changing the maps in a direction which reduces and downgrades the response characteristics in the event that the wheel slip is below a second predetermined value.

18. A control system as claimed in claim 17 further comprising the step of arranging the map change which downgrades the same in response to the slip exceeding the second predetermined value to occur after the change which downgrades in response to the slip exceeding said first predetermined value.,

19. A control system as claimed in claim 12 wherein said control means further includes an arrangement for:
determining a predetermined vehicle speed limit;
using the difference obtained in said comparing step when the vehicle speed is below said predetermined vehicle speed limit;
using value derived by dividing the difference obtained in said comparing step with the wheel speed of said driven wheels.

20. A control system as claimed in claim 12 wherein said control means further includes an arrangement for:
using the rate at which the power demand indicative parameter is changing to determine the change in engine control signal; and
limiting the value of the control signal to a value defined between the upper and lower limits of the instant control map.

21. In a method of controlling an internal combustion engine for a wheeled automotive vehicle, said engine being controlled by throttle valve means which is exclusively operated by an electronically generated engine control signal, the steps comprising:
sensing a parameter which varies with a demand for engine power;
storing a set of control maps in a memory;
arranging each of said maps to produce an engine control signal the magnitude of which increases in response to the magnitude and rate of change of said parameter, said maps being designed to exhibit control characteristics wherein the magnitude of the engine control signal for a given magnitude of said parameter, increases from map to map;
sensing wheel slip;
upgrading the maps by changing the currently used one to one which reduces the response characteristics when:
the amount of wheel slip is below said first predetermined value, and
the control signal being produced by the instant control map is at its maximum permissible level for the instant magnitude of said parameter;
downgrading the maps by changing the currently used one to which is at least one rank below the one which was used a predetermined period of time prior the occurance of wheel slip, when the wheel slip exceeds a first predetermined value;
and
using said engine control signal to control said throttle valve means.

22. A control system for an internal combustion engine for a wheeled automotive vehicle comprising:
throttle valve means for controlling the amount of power produced by said engine, said throttle valve means being exclusively controlled by an engine control signal;
means for sensing a parameter which varies with a demand for engine power;
control map means for producing said engine control signal in a manner wherein the magnitude of said engine control signal increases in response to the magnitude and rate of change of said parameter, said control map means including a memory in which a plurality control maps are stored, said maps being designed to exhibit control characteristics wherein the magnitude of the engine control signal for a given magnitude of said parameter, increases from map to map;
means for sensing wheel slip; and
control means for:
upgrading the maps by changing the currently used one to one which reduces the response characteristics when:
the amount of wheel slip is below said first predetermined value, and
the control signal being produced by the instant control map is at its maximum permissible level for the instant magnitude of said parameter;
downgrading the maps when the wheel slip exceeds said predetermined value by changing the currently used one below that which was used a predetermined time period prior the exceeding of said first predetermined value; and
generating said engine control signal based on the engine control value derived using said first set of maps.

23. In a wheeled vehicle
a driven wheel;
a first wheel speed sensor for detecting the rotational speed of said driven wheel;
an undriven wheel;
a second wheel speed sensor for detecting the rotational speed of said undriven wheel;
a manually operable accelerator;
a third sensor for detecting the position of said accelerator;
an engine;
an induction conduit through which air passes to said engine;
a single throttle valve disposed in said induction conduit for controlling the amount of air which is permitted to pass therethrough;
a servo motor unit operatively connected to said throttle valve, said servo motor being arranged to exclusively control the position of said throttle valve;
a control circuit, said control circuit being responsive to the outputs of said first, second and third sensors, said control circuit being operatively connected to said servo motor unit and arranged to produce a throttle valve control signal for controlling said servo motor unit, said throttle valve control signal being indicative of the degree to which said throttle valve should be opened, said control circuit comprising:
memory means for storing a plurality of engine control maps, said maps being recorded in terms of throttle valve opening and absolute accelerator movement, said maps being arranged to determine the angle to which the throttle valve should be opened for a given accelerator movement;
wheel slip detection means for determining the amount of wheel slip which is occuring based on the outputs of said first and second sensors; and
selection means for selecting which of said plurality of maps should be used, said selection means being responsive to the amount of wheel slip which is detected, said selection means being arranged so that upon a wheel slip in excess of a predetermined limit is detected a map which was used a predermined period of time ago is determined and utilized to determine which map is to be used under the instant circumstances.

FIG.1

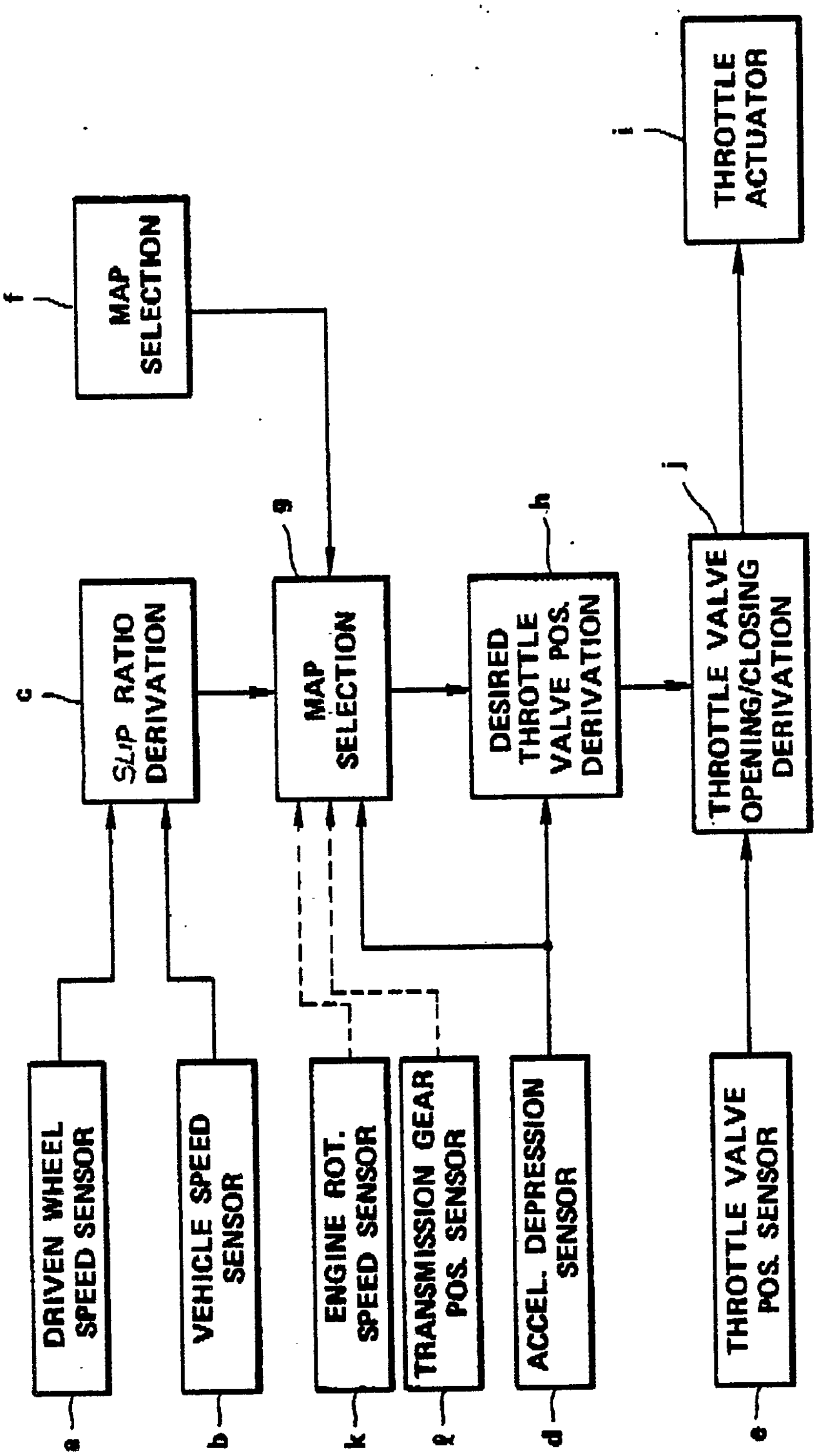


23-DEC-88 16:45 FROM ISP CORP FAX 03 545 6330 PAGE 49/61

FIG. 2

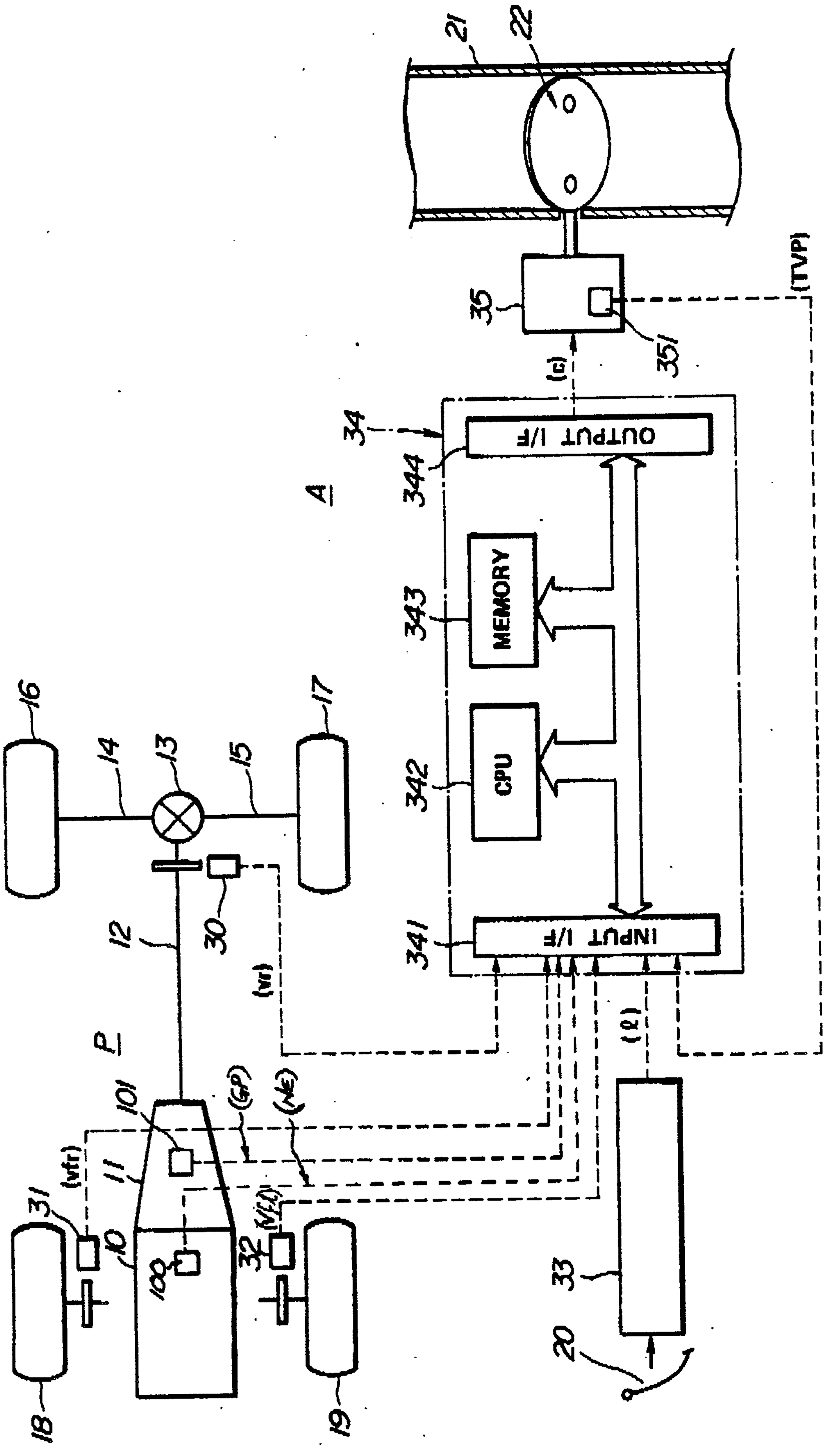


23-DEC-88 16:45 FROM ISP CORP FAX 03 545 6330 PAGE 50/61

FIG.3

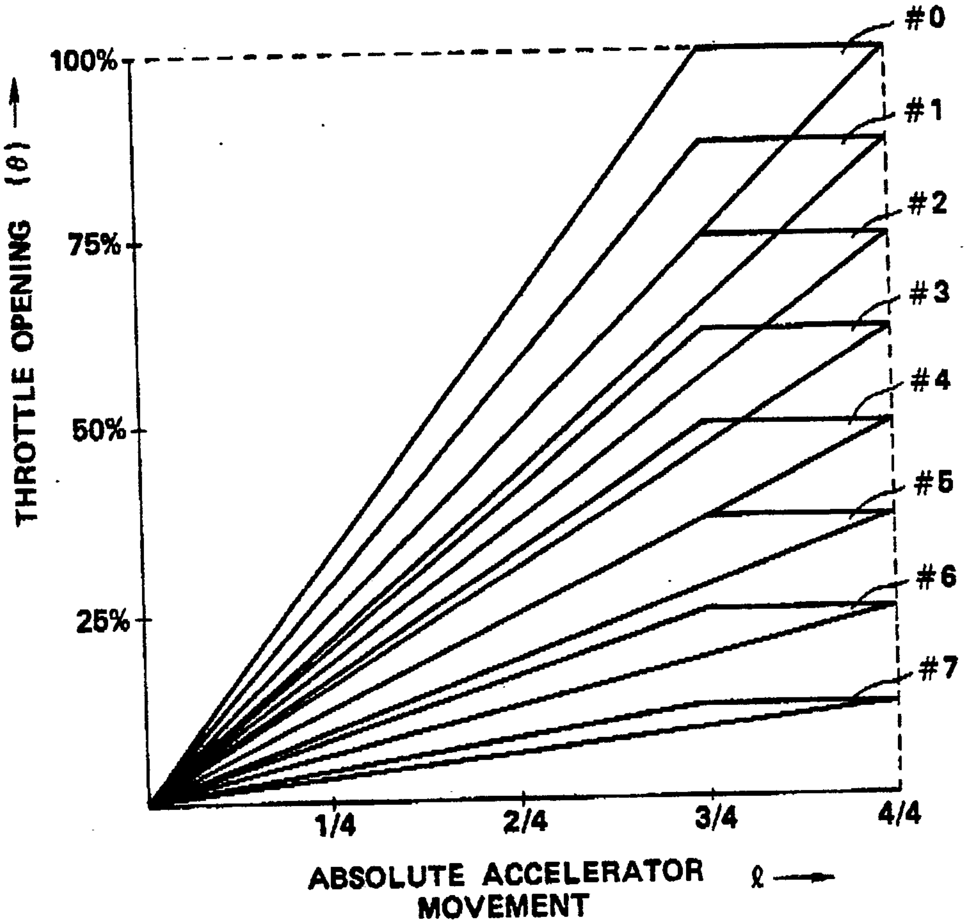
#0
#1
#2
#3
#4
#5
#6
#7
100%
75%
50%
25%
THROTTLE OPENING (θ) →
1/4
2/4
3/4
4/4
ABSOLUTE ACCELERATOR MOVEMENT ℓ →

FIG.4

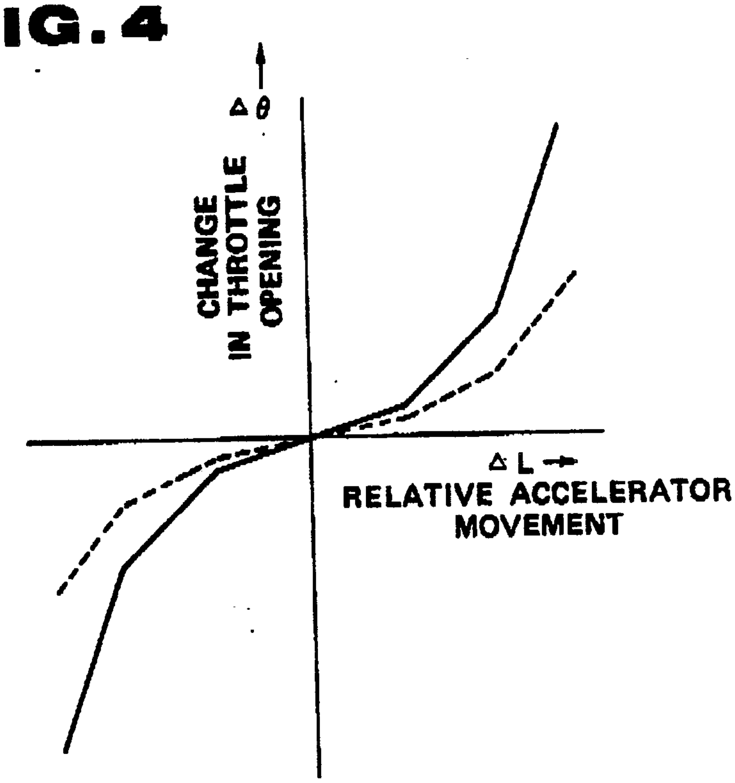
Δθ
CHANGE IN THROTTLE OPENING
ΔL →
RELATIVE ACCELERATOR MOVEMENT

FIG.5A

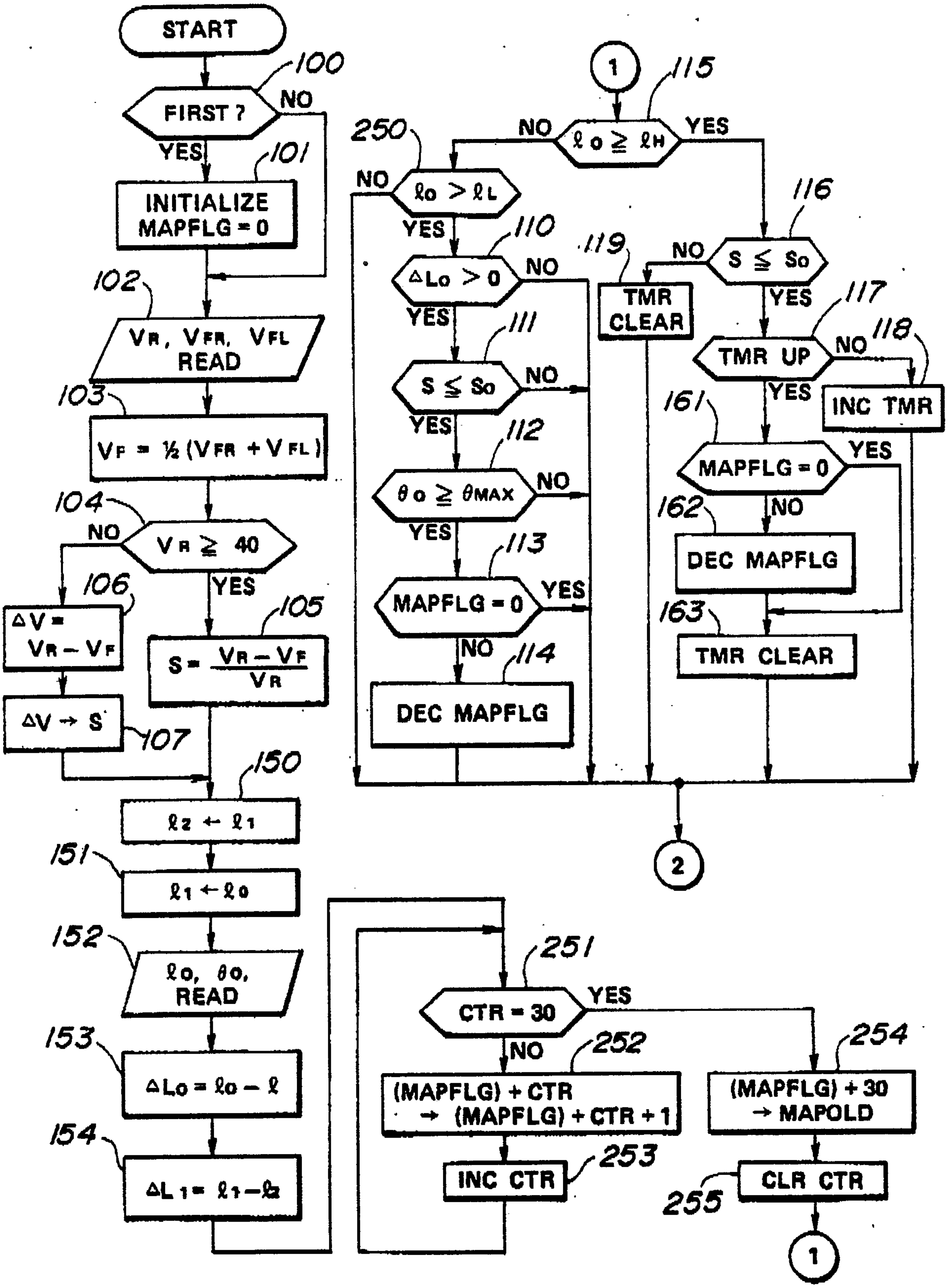
START
100
FIRST ?
NO
YES
101
INITIALIZE MAPFLG = 0
102
VR, VFR, VFL READ
103
VF = ½ (VFR + VFL)
104
VR ≧ 40
NO
YES
106
ΔV = VR − VF
105
S = (VR − VF) / VR
ΔV → S
107
150
ℓ2 ← ℓ1
151
ℓ1 ← ℓ0
152
ℓ0, θ0, READ
153
ΔL0 = ℓ0 − ℓ
154
ΔL1 = ℓ1 − ℓ2
1
115
ℓ0 ≧ ℓH
NO
YES
250
ℓ0 > ℓL
NO
YES
110
ΔL0 > 0
NO
YES
111
S ≦ S0
NO
YES
112
θ0 ≧ θMAX
NO
YES
113
MAPFLG = 0
YES
NO
114
DEC MAPFLG
119
TMR CLEAR
116
S ≦ S0
NO
YES
117
TMR UP
NO
YES
118
INC TMR
161
MAPFLG = 0
YES
NO
162
DEC MAPFLG
163
TMR CLEAR
2
251
CTR = 30
YES
NO
252
(MAPFLG) + CTR → (MAPFLG) + CTR + 1
253
INC CTR
254
(MAPFLG) + 30 → MAPOLD
255
CLR CTR
1

FIG.5B

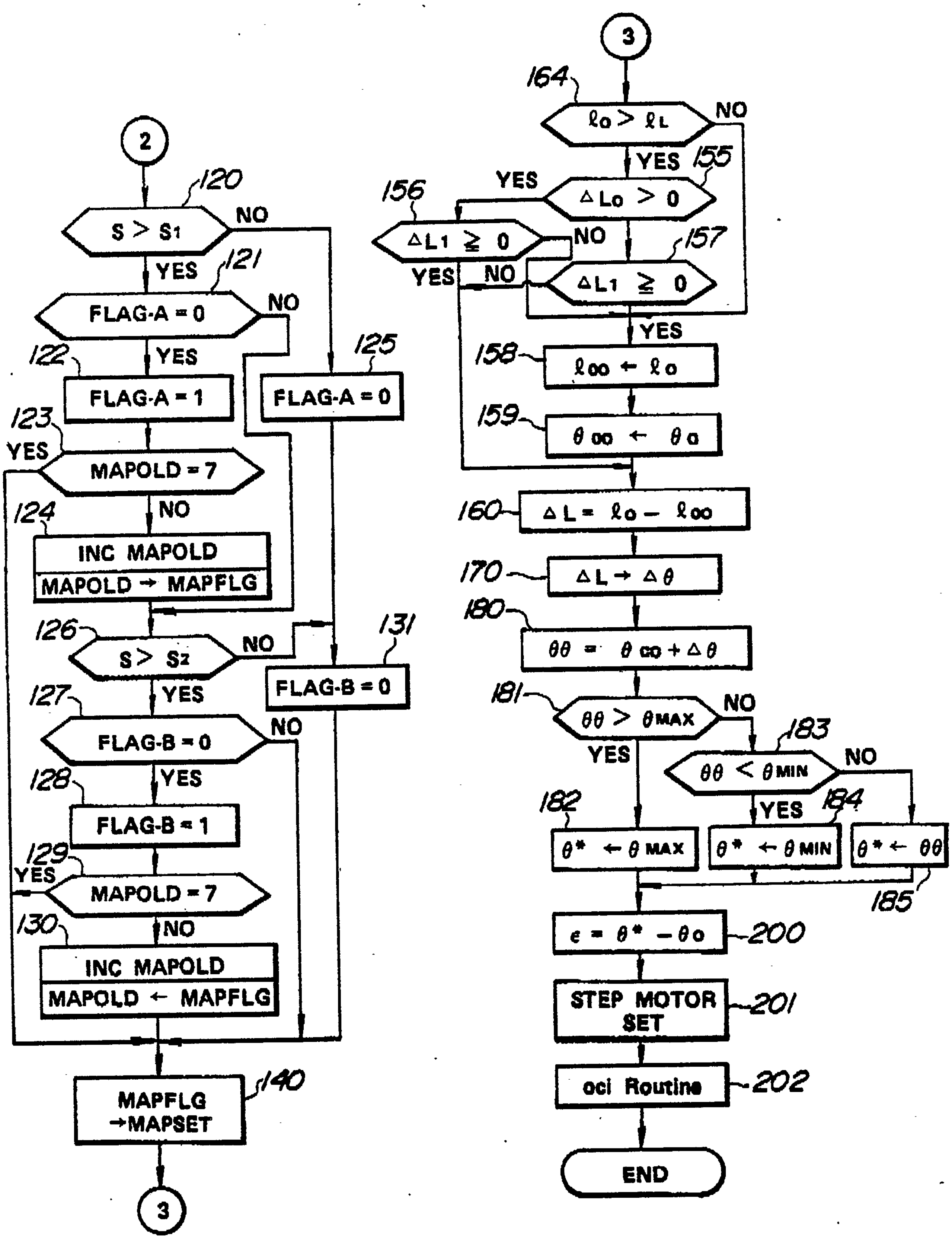


23-DEC-88 16:47 FROM ISP CORP FAX 03 545 6330 PAGE 53/61

# FIG.6

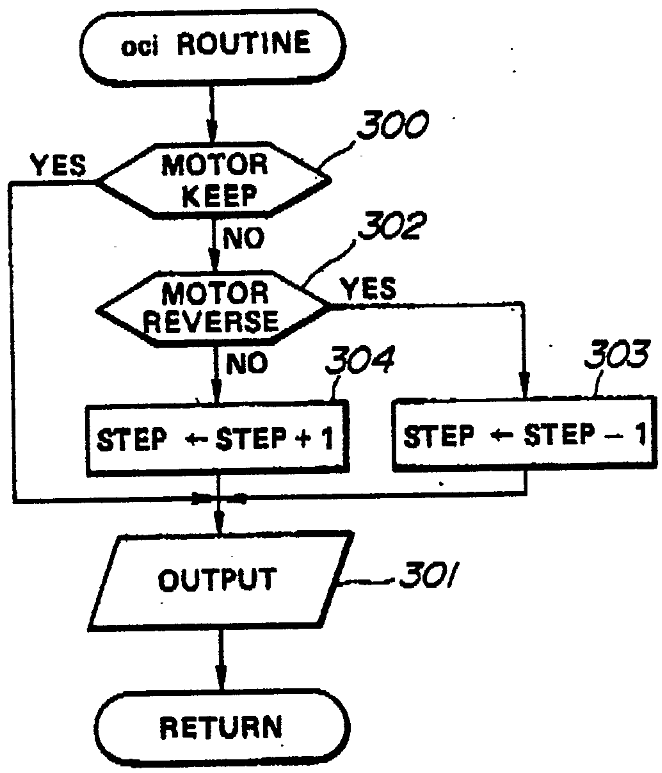


# FIG.7

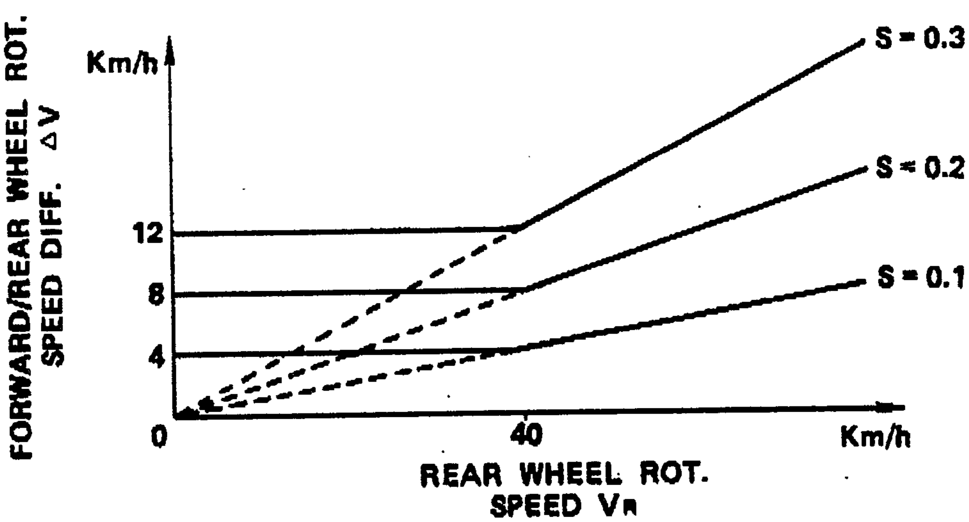


23-DEC-88 16:47 FROM ISP CORP FAX 03 545 6330 PAGE 54/61

# FIG. 8

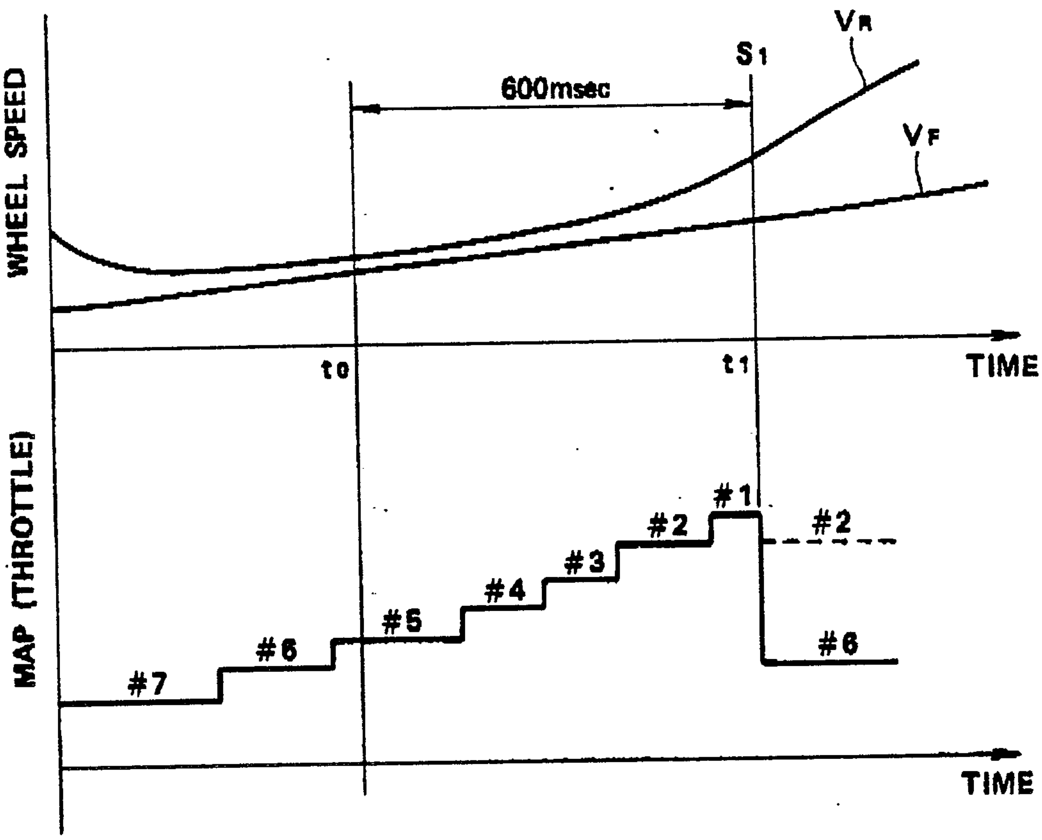
WHEEL SPEED
VR
VF
S1
600msec
t0
t1
TIME
MAP (THROTTLE)
#7
#6
#5
#4
#3
#2
#1
#2
#6
TIME

FIG. 9

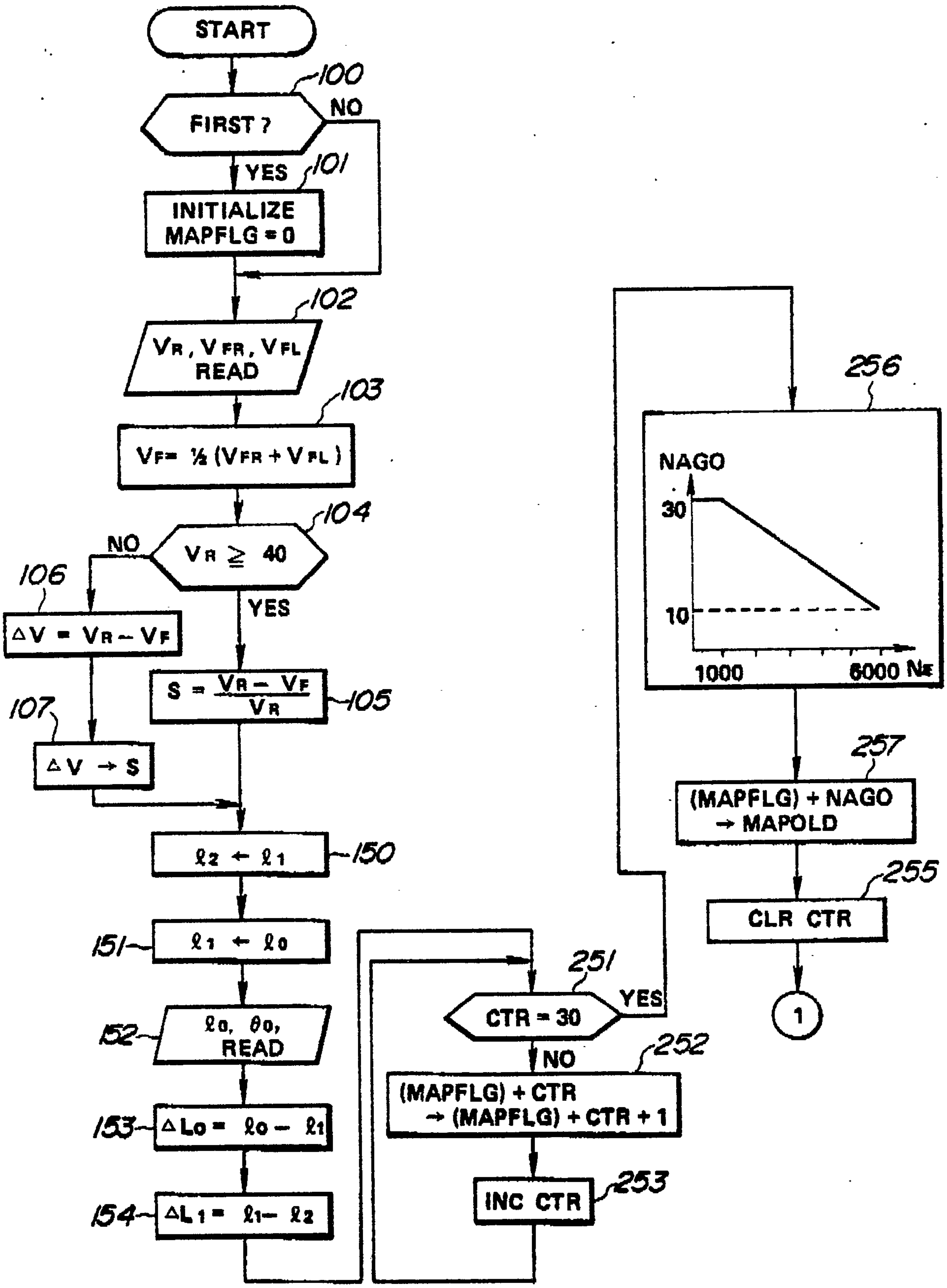


23-DEC-88 16:48 FROM ISP CORP FAX 03 545 6330 PAGE 56/61

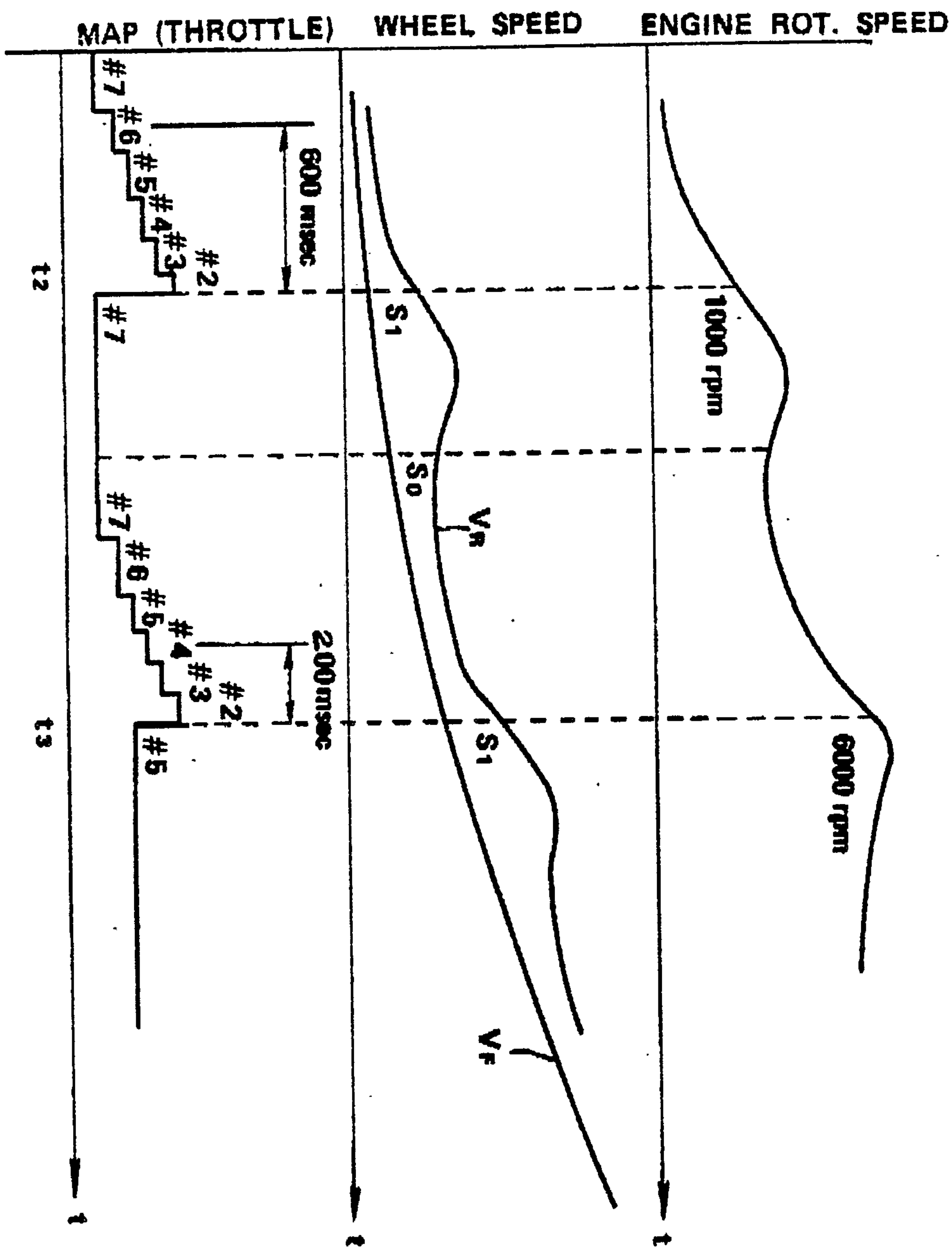


FIG.10

23-DEC-88 16:48 FROM ISP CORP FAX 03 545 6330 PAGE 57/61

FIG.11

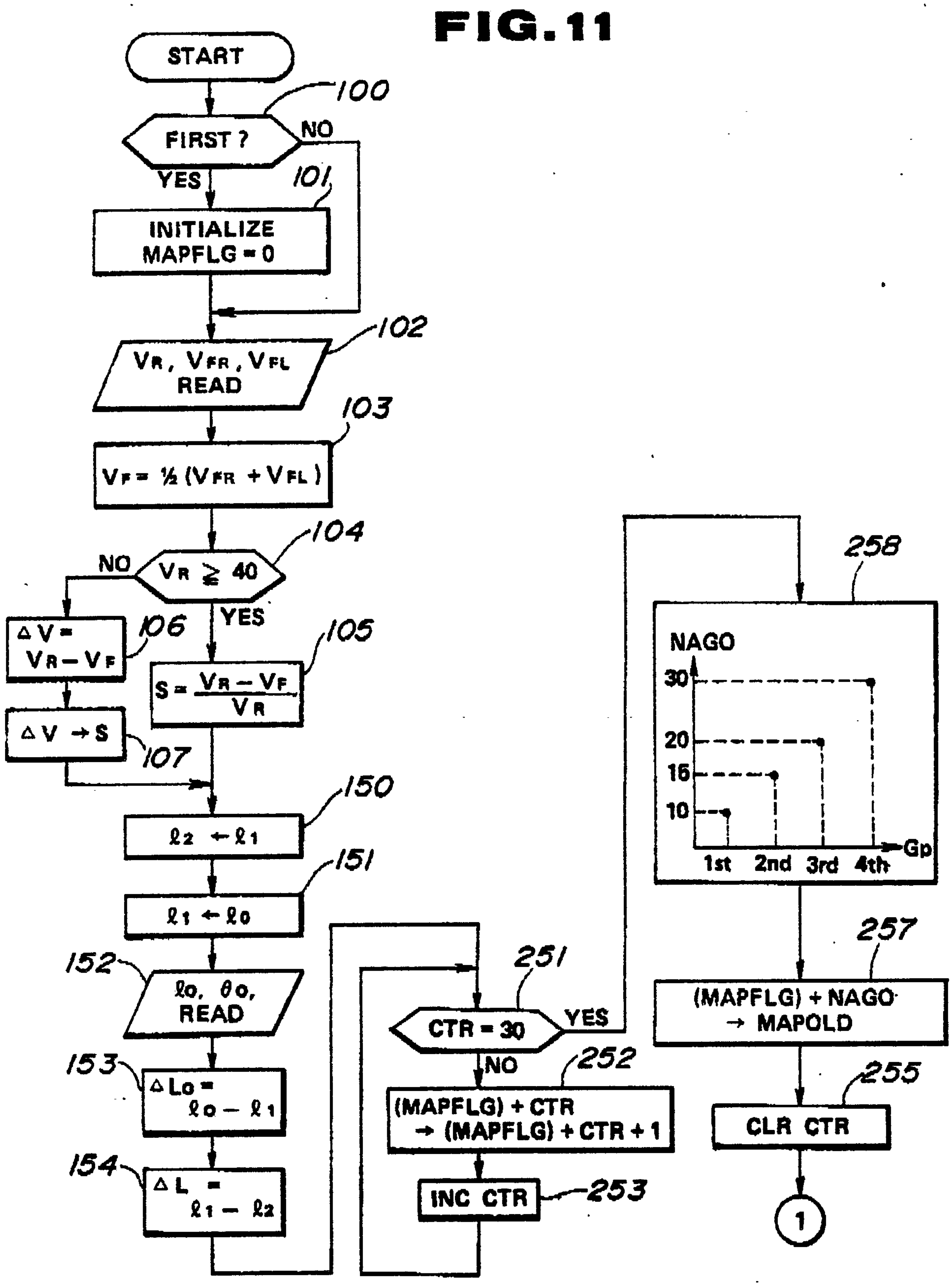
START
FIRST ?
NO
YES
100
101
INITIALIZE
MAPFLG = 0
102
$V_R$, $V_{FR}$, $V_{FL}$
READ
103
$V_F$ = ½ ($V_{FR}$ + $V_{FL}$)
104
$V_R$ ≧ 40
NO
YES
$\Delta V$ =
$V_R - V_F$
106
$S = \frac{V_R - V_F}{V_R}$
105
$\Delta V \rightarrow S$
107
$\ell_2 \leftarrow \ell_1$
150
$\ell_1 \leftarrow \ell_0$
151
152
$\ell_0$, $\theta_0$,
READ
153
$\Delta L_0$ =
$\ell_0 - \ell_1$
154
$\Delta L$ =
$\ell_1 - \ell_2$
251
CTR = 30
YES
NO
252
(MAPFLG) + CTR
→ (MAPFLG) + CTR + 1
INC CTR
253
258
NAGO
30
20
15
10
1st
2nd
3rd
4th
Gp
257
(MAPFLG) + NAGO
→ MAPOLD
255
CLR CTR
1

FIG.12

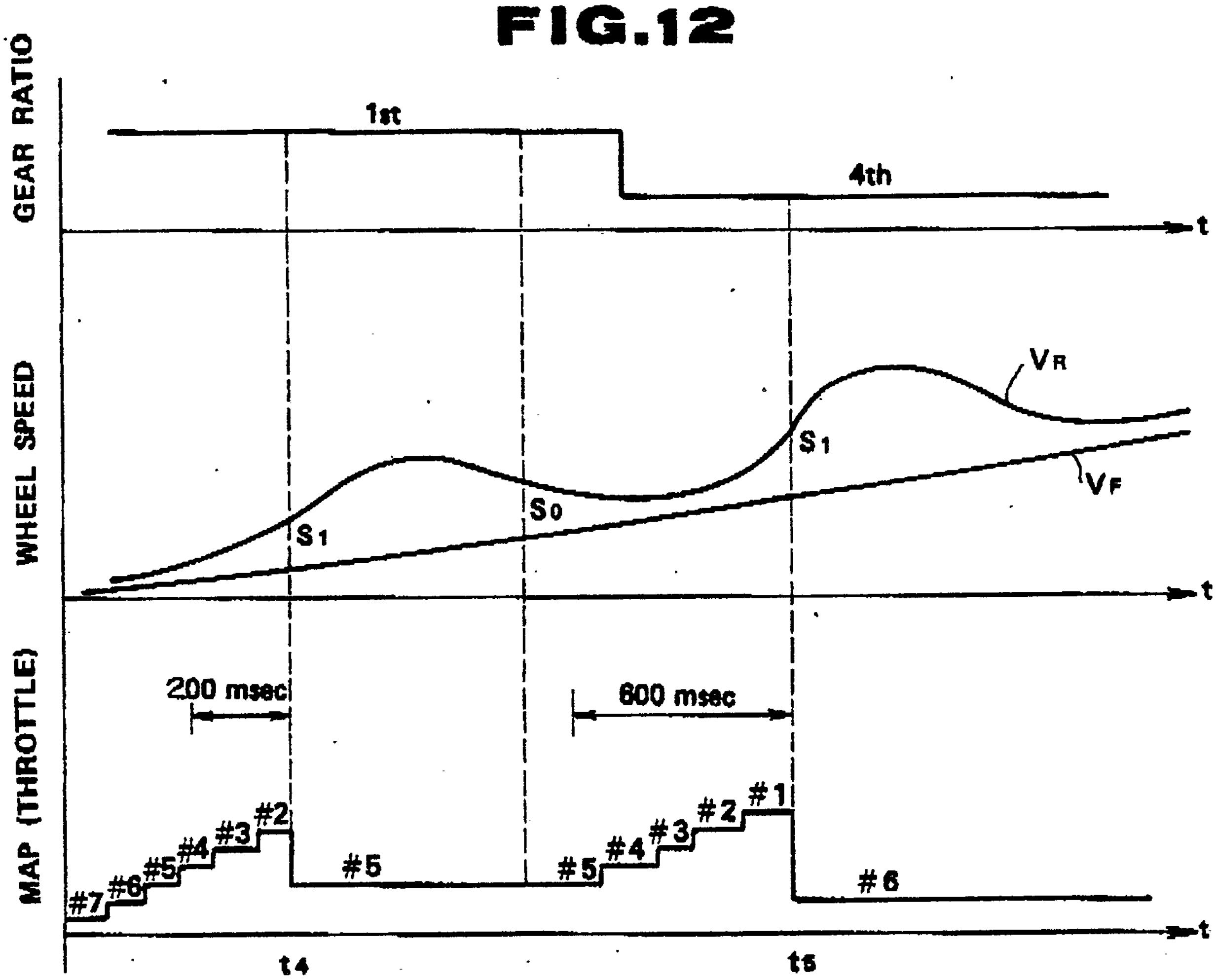


FIG.13

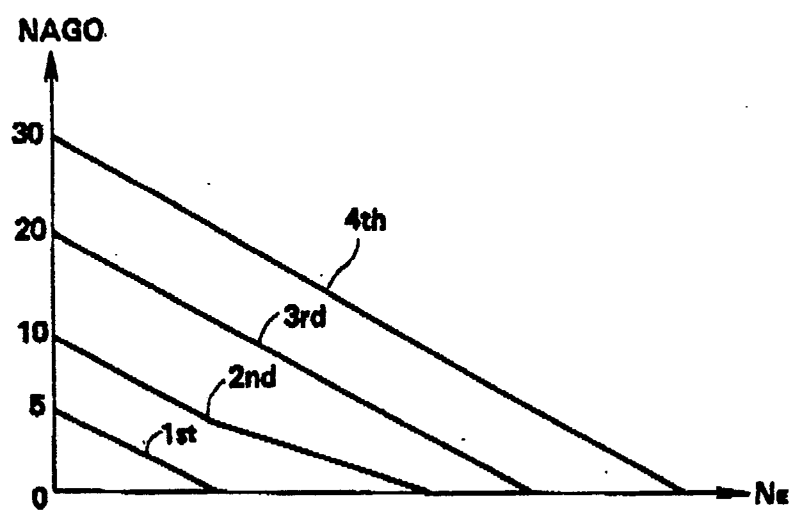


23-DEC-88 16:49 FROM ISP CORP FAX 03 545 6330 PAGE 59/61

FIG. 14

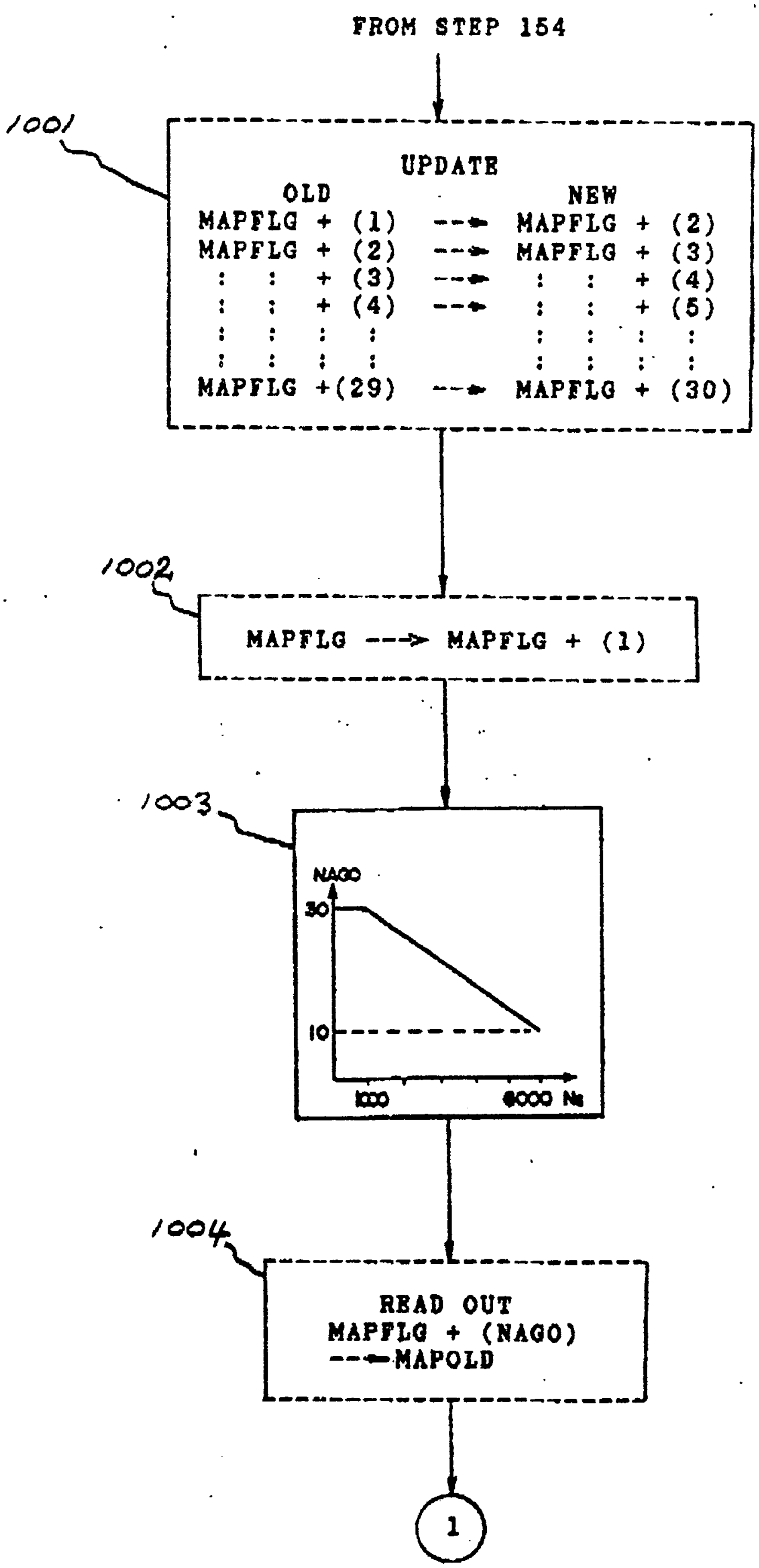
FROM STEP 154
1001
UPDATE
OLD
NEW
MAPFLG + (1) → MAPFLG + (2)
MAPFLG + (2) → MAPFLG + (3)
+ (3) → + (4)
+ (4) → + (5)
MAPFLG +(29) → MAPFLG + (30)
1002
MAPFLG → MAPFLG + (1)
1003
NAGO
30
10
1000
6000 Ns
1004
READ OUT
MAPFLG + (NAGO)
→ MAPOLD
1